# EUROPÄISCHE PATENTSCHRIFT

(11) **EP 2 184 156 B1**
(45) Veröffentlichungstag und Bekanntmachung des Hinweises auf die Patenterteilung: **23.10.2019**
(21) Anmeldenummer: 09174644.6
(22) Anmeldetag: 30.10.2009
(51) Int. Cl.: B29C 48/88, B29C 48/92, B29C 48/08

(54) **Verfahren zum Kühlen von Kunststoffflacherzeugnissen**
Process for cooling flat plastic products
Procédé pour refroidir des produits en plastique plats

(30) Priorität: 06.11.2008 DE 102008043536
(43) Veröffentlichungstag der Anmeldung: 12.05.2010
(73) Patentinhaber: battenfeld-cincinnati Germany GmbH, 32547 Bad Oeynhausen (DE)
(72) Erfinder: Becker, Klaus, 32584, Löhne (DE); Käthler, Michael, 33609, Bielefeld (DE)

(56) Entgegenhaltungen:
- EP-A2- 1 382 432
- EP-A2- 1 600 277
- DE-A1- 1 957 708
- DE-A1- 3 802 095
- DE-A1-102006 012 417
- JP-A- 8 230 018
- US-A- 4 105 386
- US-A- 5 262 101
- US-A1- 2002 027 309
- US-A1- 2002 041 056

## Beschreibung

Die Erfindung betrifft ein Verfahren zum Kühlen von Kunststoffflacherzeugnissen, bei dem mittels eines Extruders plastifizierte Kunststoffmasse über eine Schlitzdüse einem Glättwerk zugeführt wird und in diesem zwischen mindestens zwei Glättwalzen auf die gewünschte Form gewalzt und kalibriert wird, anschließend die so erzeugte Folie oder Platte einer aus mehreren verstellbaren Walzen bestehenden Kühlstrecke zugeführt wird und diese so lange durchläuft, bis sie ausreichend abgekühlt und formstabil ist, wobei mindestens sowohl die Spaltweite zwischen den Walzen als auch die Drehzahl der Walzen steuer- und/oder regelbar ist.

Derartige Glättwerke sind aus dem Stand der Technik bekannt. Die EP 1 600 277 A2, die den Gegenstand des Oberbegriffes des Anspruchs 1 offenbart, beschreibt hierzu eine Vorrichtung zum Kalibrieren und Kühlen einer Kunststofffolie oder Kunststoffplatte, die aus mindestens zwei Kühl- oder Kalibrierwalzen besteht, wobei den Walzen eine Kühlstrecke nachgeschaltet ist. Erfindungsgemäß ist dabei vorgesehen, dass die nachgeschaltete Kühlstrecke aus hintereinander angeordneten Walzenpaaren besteht.

Bei derartigen Kühlstrecken sind die Walzen zwar in ihrer Lage verstellbar, wodurch die Kühlleistung beeinflusst werden kann. Es hat sich aber gezeigt, dass beim Verstellen der Walzen die durchlaufende Folie partiell den Kontakt zur Walze verliert und dadurch ein unterschiedliches Abkühlverhalten der Folie entsteht.

**Aufgabe** der Erfindung ist es daher, ein Verfahren vorzuschlagen, bei dem dieser Nachteil vermieden werden kann und das Kunststoffflacherzeugnis optimal gekühlt wird.

Die **Lösung** der Aufgabe ist in Verbindung mit dem Oberbegriff des Anspruches 1 dadurch gekennzeichnet, dass durch Verstellen der Walzen in der Kühlstrecke in eine zueinander versetzte Anordnung der Umschlingungsgrad des Kunststoffflacherzeugnisses um die jeweilige Walze verändert und damit die Kühlleistung erhöht oder minimiert wird, wobei mittels einer entsprechenden Steuerung bei jedem Verstellvorgang die einmal vorgegebene Spaltweite konstant gehalten wird.

Das Verfahren stellt somit darauf ab, dass zwar das Kühlverhalten durch Verstellung der Walzen in ihrer geometrischen Lage verändert werden kann, aber die Steuerung so ausgelegt ist, dass einmal festgelegte geometrische Zusammenhänge innerhalb der Kühlstrecke beibehalten werden.

Weiterbildungsgemäß ist vorgesehen, dass eine Positionierungswalze das Kunststoffflacherzeugnis gegen eine der Glättwalzen drückt, wobei die Positionierungswalze unter Beibehaltung eines vorgegebenen Abstandes zur Glättwalze in einer rotatorischen Bewegung um diese Glättwalze bewegt wird. Diese Positionierungswalze definiert den Ablösepunkt des Kunststoffflacherzeugnisses von der Glättwalze, insbesondere der Oberwalze. Die relative Lage dieser Positionierungswalze zur Glättwalze definiert weiterhin die Kontaktlänge und damit die Kontaktfläche an den Glättwalzen und somit auch das Abkühlverhalten. An diese Positionierungswalze schließen sich sämtliche verstellbaren Walzen der Kühleinrichtung an, deren Abstand zueinander, wie bereits oben beschrieben, definiert ist. Hierbei ist es nicht zwingend vorgeschrieben, dass der Abstand zwischen je zwei Walzenpaaren konstant über die gesamte Kühlstrecke ist. Es ist ohne weiteres denkbar, dass dieser Abstand, bedingt durch das Abkühlverhalten des Kunststoffflacherzeugnisses, zum Ende der Kühlstrecke kleiner wird.

In einer weiteren Fortbildung ist vorgesehen, dass die Mittelachsen der Walzen der Kühlstrecke beim Verstellvorgang parallel zueinander gehalten werden. Durch diese Vorgabe ist sichergestellt, dass der einmal eingestellte Abstand zwischen den Walzen auch über die gesamte Breite der Walze konstant bleibt.

Fortbildungsgemäß ist weiterhin vorgesehen, dass die Mittelachsen zweier benachbarter Walzen eine geometrische Ebene definieren, wobei beim Verstellvorgang die so definierten Ebenen um jeweils eine der Mittelachsen rotieren und der Abstand zwischen den Mittelachsen der benachbarten Walzen konstant bleibt. Man kann die so definierten Ebenen zwischen den jeweiligen Mittelachsen mit dem Faltenbalg einer Ziehharmonika vergleichen, deren Falten beim Aufziehen zwar in Abhängigkeit zueinander weiter auffalten, aber bedingt durch die Fixierung an den Knickkanten eine vorgegebene Lage in sich beibehalten.

Fortbildungsgemäß ist weiterhin vorgesehen, dass die Positionierungswalze und die anschließenden Kühlwalzen synchron verstellt werden. Wird also die Position der Positionierungswalze zur Glättwalze verändert, folgen synchron unter Beibehaltung des vorgegebenen Abstandes zueinander sämtliche verstellbare Walzen der Kühleinrichtung.

Die Steuerung der Anlage ist weiterbildungsgemäß so ausgelegt, dass in Abhängigkeit eines Vorgabewertes automatisch die erforderlichen weiteren Parameter - hier wird beispielsweise an den Walzenabstand, an den Umschlingungswinkel, das Spaltmaß oder die Kühlkontaktfläche gedacht - mit verändert werden. Dies hat den Vorteil, dass der Maschinenbediener nur sehr wenige Vorgaben an der Steuerung vornehmen muss und sich der Rest innerhalb der gesamten Kühlstrecke automatisch dazu anpasst.

Es kann somit beispielsweise in vorteilhafter Weise lediglich die Spaltweite vorgegeben werden und alle Walzen der Kühlstrecke werden automatisch und synchron dazu verstellt.

Da bei dem erfindungsgemäßen Verfahren eine Vielzahl von Verfahrensparametern automatisch nach einem bestimmten mathematischen Modell sich verändern, wird innerhalb der Kühlvorrichtung eine Kollision mit dieser während des Verstellens der Walzen überwacht.

Die einfache Verstellauslösung und somit Änderung der Kontaktflächen ist mit einer On-Touch-Bedienung realisiert. Die oben beschriebene Kollisionsüberwachung zum Kühlvorrichtungsrahmen umfasst auch eine Kollisionsüberwachung der Positionierungswalze und den nachgeschalteten Kühlwalzen untereinander.

Die bei diesem Verfahren vorgeschlagene Steuerung der Anlage kann weiterhin noch regelungstechnische Punkte umfassen, wo hier beispielsweise an eine Temperaturmessung des Kunststoffflacherzeugnisses mittels berührungslosem Infrarotsensors oder eine Farbmessung der Folienoberfläche gedacht wird. Integriert werden kann ebenso auch eine Glanzmessung. Durch diese Messparameter kann eine automatische Einstellung, Regelung oder Optimierung der Kühlkontaktfläche in Abhängigkeit der Oberflächentemperatur umgesetzt werden. Als abhängiger Parameter kann ebenfalls die Farbmessung oder die Glanzmessung herangezogen werden.

Es wird also vorgeschlagen, in Abhängigkeit der Messergebnisse automatisch Einfluss auf die Kühlstrecke zu nehmen und, wie weiter oben beschrieben, die verstellbaren Walzen zu positionieren, wobei die Messwerte einzeln oder in einer Kombination herangezogen werden können.

Mittels der Steuerung und Regelung kann auch die Optimierung des Maschinenarbeitspunktes, d.h. der Ausstoßleistung des Extruders oder der Produktionsgeschwindigkeit in Abhängigkeit der Temperatur-, Farb- und Glanzmessung umgesetzt werden. In Abhängigkeit dieser Messwerte ist es natürlich ebenfalls denkbar, Einfluss auf die Kühlleistung der einzelnen Walzenmodule zu nehmen, indem die Temperatur der einzelnen Walzen erhöht oder minimiert wird, da diese Walzen mit einer Temperierung versehen sind. Die Veränderung der Kühlwalzentemperatur kann über die Regelung des Temperaturverlaufes durch Temperaturgradientenveränderung erreicht werden. In diesem Fall wird vorgeschlagen, mehrere Messstellen innerhalb der Kühlstrecke anzuordnen.

In den Zeichnungen ist schematisch ein Ausführungsbeispiel der Erfindung wiedergegeben.
- Fig. 1: zeigt den Schnitt durch eine Glätt- und Kühlstrecke,
- Fig. 2: entspricht Figur 1 mit einer anderen Position der Kühlwalzen und
- Fig. 3: zeigt das Abkühlverhalten der Folie bei Kühlwalzenstellung gem. Figur 2 und
- Fig. 4: das Abkühlverhalten der Folie bei Kühlwalzenstellung gem. Figur 3.

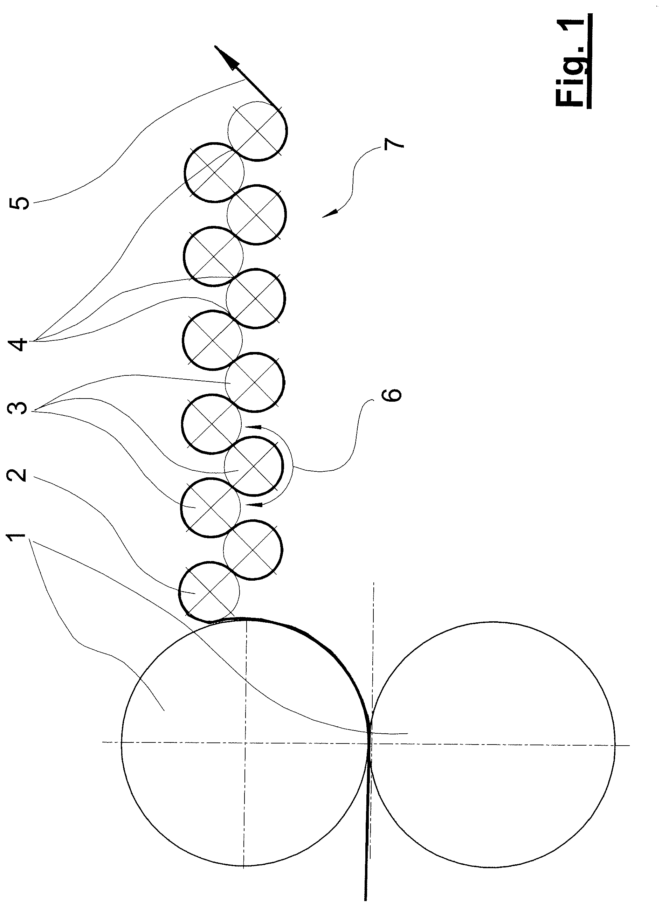

In der Figur 1 ist schematisch das Glättwerk mit der Kühlstreckenanordnung dargestellt. Es zeigt den Längsschnitt durch sämtliche Walzen, wobei sich vor diesem Glättwalzenwerk in der Figurendarstellung auf der linken Hälfte der Extruder und die Breitschlitzdüse befinden, beides nicht dargestellt, und, ebenfalls nicht dargestellt, rechts von der Figur ein Aufwickelsystem für die so erzeugte Folie. Die Folie kommt also aus der Breitschlitzdüse von links gesehen auf die beiden Glättwalzen 1, wird mittels der Positionierungswalze 2 an die obere Glättwalze 1 mit einem vorgegebenen Abstand geführt, die Positionierungswalze 2 ist um die Mittelachse der oberen Glättwalze 1 entlang des darum zu drehenden Radius verdrehbar und bestimmt somit den Ablösepunkt der Folie von der oberen Glättwalze 1. Die Folie wird um die Positionierungswalze 2 und um alle anschließenden verstellbaren Walzen 3 herumgeführt und verlässt die Kühlstrecke in Pfeilrichtung und kann auf einem nicht dargestellten Folienwickler aufgewickelt werden. Zwischen jeder benachbarten verschiebbaren Walze 3 ist ein Spaltmaß 4 definiert, welches jedoch nicht über sämtliche verstellbaren Walzen 3 identisch sein muss. Alle hintereinander angeordneten Walzen 3 bilden die Kühlstrecke 7. Über die Stellung der Walzen 3 zueinander wird definiert, wie groß der Umschlingungswinkel 6 der Folie um jede Walze 3 ist.

Wird nun die Positionierungswalze 2 entlang des Umfanges der oberen Glättwalze 1 mit konstantem Abstand relativ zu dieser nach oben geführt, müssen die verstellbaren Walzen 3 dieser Bewegung synchron folgen und ihren Abstand relativ zu den Glättwalzen 1 vergrößern, damit das vorgegebene Spaltmaß 4 zu den Walzen untereinander konstant bleibt.

Die Mittelachsen der Walzen 2 und 3 bilden zwischen zwei benachbarten Walzen eine Ebene. In der Figur 1 ist diese Ebene durch die Schnittdarstellung als eine Linie zwischen den jeweiligen Mittelachsen, die in der Kreisdarstellung als Mittelpunkt zu sehen sind, dargestellt. Beim Verstellen der Walzen 3 ist nun über die Steuerung sichergestellt, dass der Abstand zu den Achsen immer gleich bleibt, jedoch der Winkel der jeweiligen Ebenen veränderbar ist, was bezogen auf die zweidimensionale Darstellung in der Figur 1 bedeutet, dass die Verbindungslinien zwischen den Mittelpunkten der Walzen 2 und 3 in der Länge konstant bleiben, jedoch im Winkel zueinander veränderbar sind.

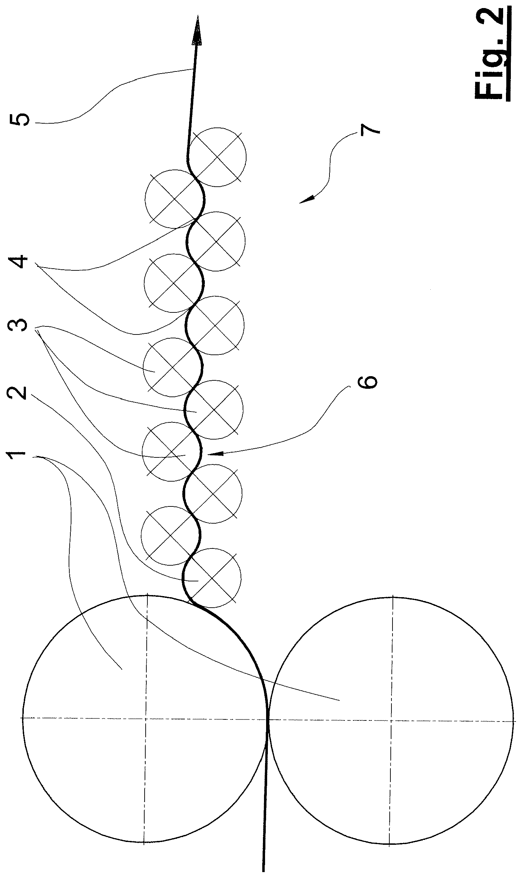

Figur 2 entspricht im Wesentlichen der Figur 1, jedoch mit dem Unterschied, dass nun die Positionierungswalze 2 und die verstellbaren Walzen 3 unterhalb der Mittelachse der oberen Glättwalze 1 liegen. Es ist somit ein sehr großer Bereich um die Mittelachse der oberen Glättwalze 1 realisierbar.

Selbst eine Stellung, in der die Position der Positionierungswalze 2, gefolgt von den verschiebbaren Walzen 3, auf einer horizontalen Ebene liegt und die gesamte Walzenanordnung auf der Mittelachsenebene der oberen Glättwalze 1 liegt, ist umsetzbar und führt zu beachtlichen Ergebnissen. Sämtliche Walzen lägen dann in einem Schnitt analog der Figuren 1 und 2 somit mit ihrem Mittelpunkt auf ein und derselben Geraden. Die Folie würde in einer solchen Stellung dann 90° an der oberen Glättwalze 1 und jeweils 180° um die Positionierungs- und verschiebbaren Walzen 2 bzw. 3 anliegen.

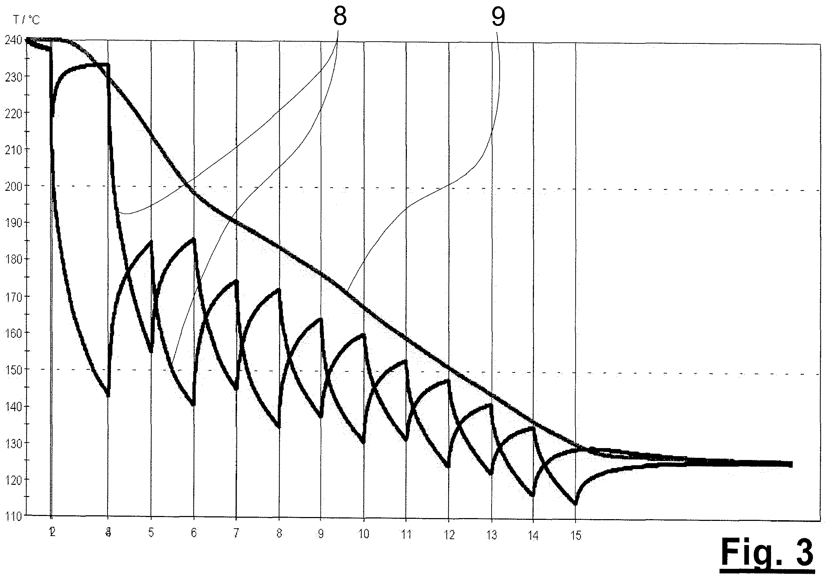

Figur 3 zeigt den Temperaturverlauf der Oberflächentemperatur der geglätteten Folie, wobei jede der beiden Kurven 8 je eine Oberfläche der Folie 5 widerspiegelt. Hierbei wird deutlich, dass die Temperatur der Oberfläche der Folie ansteigt, sobald diese den Kontakt zur Kühlwalze verliert und die andere Seite der Folie gekühlt wird. Es entsteht somit eine Zickzack-Linie, deren gemittelter Wert durch die Kurve 9 wiedergegeben ist. Der Temperaturverlauf gemäß Figur 3 entspricht in etwa der Walzenstellung gemäß Figur 2.

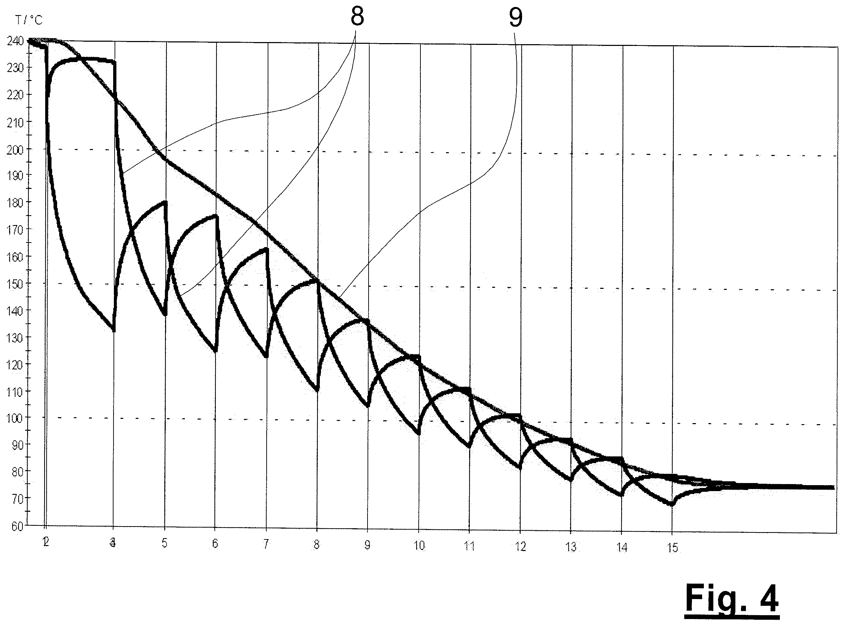

Figur 4 zeigt analog Figur 3 ebenfalls den Temperaturverlauf, wobei wiederum die Kurven 8 die Temperatur der beiden Oberflächen der Folie 5 wiedergeben und die Kurve 9 den gemittelten Wert. Der Temperaturverlauf gemäß Figur 4 entspricht in etwa der Walzenstellung gemäß Figur 1. Im Vergleich der Figuren 3 und 4 wird deutlich, dass über die Kühlstrecke ein wesentlich größeres Temperaturgefälle erreicht wird, wenn die Walzenstellung gemäß der Figur 1 gewählt wird, da hier im Vergleich zu Figur 2 eine wesentlich größere Kontaktfläche zu den Kühlwalzen realisiert wird. Bereits an der oberen Glättwalze 1 liegt die Folie ca. 115° an und der Umschlingungswinkel um die jeweilige Walze 3 oder 2 beträgt ca. 240°.

Die beiden Anschauungsbeispiele in Verbindung mit dem Temperaturverlauf zeigen deutlich, dass bei gleicher Kühlleistung innerhalb der Walzen 3, gleichem Aufbau der Walzen 3 und gleicher Oberflächenbeschaffenheit der Walzen 3 allein durch die Stellung der Walzen 3 zueinander bei gleicher Abzugsgeschwindigkeit und natürlich auch gleichem Material eine deutlich größere Kühlleistung erzielt werden kann. Da je nach eingesetztem Kunststoffmaterial und gewünschtem Glanzgrad etc. andere Einstellungen erforderlich sind, bietet das offenbarte Verfahren eine sehr einfach Anpassung, da durch die Wahl nur eines Parameters an der Steuerung alle weiteren Parameter in Abhängigkeit eingestellt werden und die Steuerung alle Walzen automatisch und synchron nachführt.

### Bezugszeichenliste:

- 1: Glättwalze
- 2: Positionierungswalze
- 3: verstellbare Walze
- 4: Spaltweite
- 5: Kunststoffflacherzeugnis
- 6: Umschlingungsgrad
- 7: Kühlstrecke
- 8: Temperaturverlauf der Oberflächentemperatur von 5
- 9: Gemittelter Wert von 8

## Patentansprüche

1. Verfahren zum Kühlen von Kunststoffflacherzeugnissen (5), bei dem mittels eines Extruders plastifizierte Kunststoffmasse über eine Schlitzdüse einem Glättwerk zugeführt wird und
in diesem zwischen mindestens zwei Glättwalzen (1) auf die gewünschte Form gewalzt und kalibriert wird,
anschließend die so erzeugte Folie (5) oder Platte (5) einer aus mehreren verstellbaren Walzen (3) bestehenden Kühlstrecke (7) zugeführt wird und diese so lange durchläuft, bis sie ausreichend abgekühlt und formstabil ist,
wobei mindestens sowohl die Spaltweite (4) zwischen den Walzen als auch die Drehzahl der Walzen steuer- und/oder regelbar ist,
**dadurch gekennzeichnet, dass**
durch Verstellen der Walzen (2, 3) in der Kühlstrecke (7) in eine zueinander versetzte Anordnung der Umschlingungsgrad (6) des Kunststoffflacherzeugnisses (5) um die jeweilige Walze (2, 3) verändert und damit die Kühlleistung erhöht oder minimiert wird,
wobei mittels einer entsprechenden Steuerung bei jedem Verstellvorgang die einmal vorgegebene Spaltweite (4) konstant gehalten wird.

2. Verfahren nach Anspruch 1, **dadurch gekennzeichnet, dass** eine Positionierungswalze (2) das Kunststoffflacherzeugnis (5) gegen eine der Glättwalzen (1) drückt, wobei die Positionierungswalze (2) unter Beibehaltung eines vorgegebenen Abstandes zur Glättwalze (1) in einer rotatorischen Bewegung um diese Glättwalze bewegt wird.

3. Verfahren nach Anspruch 1 oder 2, **dadurch gekennzeichnet, dass** die Mittelachsen der Walzen (2, 3) der Kühlstrecke (7) beim Verstellvorgang parallel zueinander gehalten werden.

4. Verfahren nach Anspruch 3, **dadurch gekennzeichnet, dass** die Mittelachsen zweier benachbarter Walzen (2, 3) eine geometrische Ebene definieren, wobei beim Verstellvorgang die so definierten Ebenen um jeweils eine der Mittelachsen rotieren und der Abstand zwischen den Mittelachsen der benachbarten Walzen konstant bleibt.

5. Verfahren nach einem der vorigen Ansprüche, **dadurch gekennzeichnet, dass** die Positionierungswalze (2) und die Kühlwalzen (3) synchron verstellt werden.

6. Verfahren nach einem der vorigen Ansprüche, **dadurch gekennzeichnet, dass** die erforderlichen Parameter wie Walzenabstand, Umschlingungswinkel oder Kühlkontaktflächen in Abhängigkeit eines Vorgabewertes automatisch verändert werden.

7. Verfahren nach einem der vorigen Ansprüche, **dadurch gekennzeichnet, dass** in Abhängigkeit der eingegebenen Spaltweite (4) alle Walzen (3) der Kühlstrecke (7) automatisch und synchron verstellt werden.

8. Verfahren nach einem der vorigen Ansprüche, **dadurch gekennzeichnet, dass** während der Verstellung der Walzen (2, 3) eine Kollision mit dem Kühlvorrichtungsrahmen überwacht wird.

9. Verfahren nach mindestens einem der vorigen Ansprüche, **dadurch gekennzeichnet, dass** das Verstellen der Walzen (2, 3) in Abhängigkeit eines Messergebnisses am erzeugten Kunststoffflacherzeugnis automatisch erfolgt.

10. Verfahren nach Anspruch 9, **dadurch gekennzeichnet, dass** die Verstellung in Abhängigkeit der gemessenen Temperatur der Folienoberfläche erfolgt.

11. Verfahren nach Anspruch 9, **dadurch gekennzeichnet, dass** die Verstellung in Abhängigkeit der Farb- und/oder Glanzmessung erfolgt.

## Claims

1. Process for cooling flat plastic products (5), in which plasticized plastic material is fed via a slotted nozzle to a calender by means of an extruder,
the plasticized plastic material being rolled to the desired form and calibrated inside that extruder between at least two calenders,
the thusly produced film (5) or panel (5) being fed to a cooling line (7) comprising a number of adjustable rollers (3) and traveling through it for as long as it takes for the plastic film (5) or panel (5) to be sufficiently cooled and dimensionally stable,
at least the gap width (4) between the rollers as well as the rotational speed of the rollers being controllable and/or adjustable,
**characterized in that**
adjusting the rollers (2, 3) within the cooling line (7) to be arranged axially displaced to each other alters the arc of wrap (6) of the flat plastic product (5) around the respective roller (2, 3), thus increasing or minimizing the cooling capacity,
the respectively defined gap width (4) being held constant after each adjustment by means of an appropriate control.

2. Process according to claim 1, **characterized in that** a positioning roller (2) presses the flat plastic product (5) against one of the smoothing rollers (1), the positioning roller (2) being moved around the smoothing roller (1) with a rotational movement while maintaining a predefined distance to said smoothing roller (1).

3. Process according to claim 1 or 2, **characterized in that** the central axes of the rollers (2, 3) of the cooling line (7) are held parallel to each other during the adjustment.

4. Process according to claim 3, **characterized in that** the central axes of two adjacent rollers (2, 3) define a geometrical plane, the thus defined planes rotating around one of the central axes each during adjustment, and that the distance between the central axes of these two adjacent rollers is stays constant.

5. Process according to one of the preceding claims, **characterized in that** the positioning roller (2) and the cooling roller (3) are adjusted synchronously.

6. Process according to one of the preceding claims, **characterized in that** the required parameters like the distance between the rollers, the arc of wrap or the cooling contact surfaces are automatically adjusted as a function of a specified value.

7. Process according to one of the preceding claims, **characterized in that** as a function of the entered gap width (4) all the rollers (3) of the cooling line (7) are automatically and synchronously adjusted.

8. Process according to one of the preceding claims, **characterized in that** during the adjustment of the rollers (2, 3) a collision with the frame of the cooling device is monitored.

9. Process according to at least one of the preceding claims, **characterized in that** the adjustment of the rollers (2, 3) is carried out as a function of measurement results at the produced flat plastic product.

10. Process according to claim 9, **characterized in that** the adjustment is carried out as a function of the measured surface temperature of the film.

11. Process according to claim 9, **characterized in that** the adjustment is carried out as a function of the color and/or gloss measurement.

## Revendications

1. Procédé de refroidissement d'un produit plat en plastique (5), lors duquel de la masse en plastique plastifiée est alimentée via une tuyère à fente à une lisseuse au moyen d'une extrudeuse et
qu'elle est laminée à la forme souhaitée et calibrée dans ladite lisseuse entre au moins deux cylindres de lissage,
que dans la suite, le film (5) ou le panneau (5) est alimenté à une ligne de refroidissement (7) comprenant plusieurs cylindres ajustables (3) et qu'il passe par ladite ligne de refroidissement jusqu'à ce qu'il soit suffisamment refroidi et indéformable,
au moins la largeur de fente (4) entre les cylindres ainsi que la vitesse de rotation des cylindres pouvant être contrôlées et/ou réglées,
**caractérisé en ce que**
l'ajustement des cylindres (2, 3) dans la ligne de refroidissement (7), s'il se fait de manière à ce que les cylindres (2, 3) soient décalés l'un de l'autre dans le sens axial, change le dégrée d'enroulement (6) du produit plat en plastique (5) autour du cylindre respectif (2, 3), ainsi augmentant ou diminuant la capacité de refroidissement,
la largeur de fente (4), une fois prédéfinie, étant maintenue constante lors de chaque ajustement au moyen d'une gestion appropriée.

2. Procédé selon la revendication 1, **caractérisé en ce qu'**un cylindre de positionnement (2) pousse le produit plat en plastique (5) contre un des cylindres de lissage (1), le cylindre de positionnement (2) étant bougé autour ledit cylindre de lissage (1) en rotation, en même temps maintenant une distance prédéfinie du cylindre de lissage (1).

3. Procédé selon la revendication 1 ou 2, **caractérisé en ce que** les axes centraux des cylindres (2, 3) de la ligne de refroidissement (7) sont maintenues parallèles l'un de l'autre lors de l'ajustement.

4. Procédé selon la revendication 3, **caractérisé en ce que** les axes centraux de deux cylindres (2, 3) voisins définissent un plan géométrique, les plans si définis tournant chacun autour un des axes centraux et la distance entre les axes centraux des cylindres voisins restant constante lors de l'ajustement.

5. Procédé selon l'une quelconque des revendications précédentes, **caractérisé en ce que** le cylindre de positionnement (2) et le cylindre de refroidissement (3) sont ajustés de façon synchronisée.

6. Procédé selon l'une quelconque des revendications précédentes, **caractérisé en ce que** les paramètres nécessaires tels que la distance entre les cylindres, le dégrée d'enroulement ou les surfaces de contact de refroidissement sont modifiés automatiquement en fonction d'une valeur définie.

7. Procédé selon l'une quelconque des revendications précédentes, **caractérisé en ce que** tous les cylindres (3) de la ligne de refroidissement (7) sont ajustés de façon automatique et synchronisée en fonction de la largeur de fente (4) entrée.

8. Procédé selon l'une quelconque des revendications précédentes, **caractérisé en ce qu'**une collision des cylindres (2, 3) avec le cadre du dispositif de refroidissement lors de l'ajustement est surveillée.

9. Procédé selon au moins l'une quelconque des revendications précédentes, **caractérisé en ce que** l'ajustement des cylindres (2, 3) se fait automatiquement en fonction d'un résultat de mesure au produit plat en plastique fabriqué.

10. Procédé selon la revendication 9, **caractérisé en ce que** l'ajustement se fait en fonction de la température mesurée de la surface de la feuille.

11. Procédé selon la revendication 9, **caractérisé en ce que** l'ajustement se fait en fonction de la mesure de couleur et/ou de brillance.
